# EUROPÄISCHE PATENTSCHRIFT

(11) **EP 3 281 846 B1**
(45) Veröffentlichungstag und Bekanntmachung des Hinweises auf die Patenterteilung: **08.07.2020**
(21) Anmeldenummer: 17183258.7
(22) Anmeldetag: 26.07.2017
(51) Int. Cl.: B62D 15/02, G08G 1/16, B60W 30/09, B60T 7/22, B60W 30/095, B60W 50/16

(54) **STEUERUNGSSYSTEM UND STEUERUNGSVERFAHREN ZUM FÜHREN EINES KRAFTFAHRZEUGS ENTLANG EINES PFADES UND ZUM VERMEIDEN EINER KOLLISION MIT EINEM ANDEREN KRAFTFAHRZEUG**
CONTROL SYSTEM AND CONTROL METHOD FOR GUIDING A MOTOR VEHICLE ALONG A PATH AND FOR AVOIDING A COLLISION WITH ANOTHER MOTOR VEHICLE
SYSTÈME ET PROCÉDÉ DE COMMANDE DESTINÉS À GUIDER UN VÉHICULE AUTOMOBILE SUR UNE TRAJECTOIRE ET À ÉVITER UNE COLLISION AVEC UN AUTRE VÉHICULE

(30) Priorität: 11.08.2016 DE 102016009764
(43) Veröffentlichungstag der Anmeldung: 14.02.2018
(73) Patentinhaber: ZF Automotive Germany GmbH, 73553 Alfdorf (DE)
(72) Erfinder: Goette, Christian, 44141 Dortmund (DE); Keller, Martin, 40883 Ratingen (DE); Bertram, Torsten, 40547 Duesseldorf (DE); Wissing, Christian, 44147 Dortmund (DE); Homann, Andreas, 44369 Dortmund (DE); Glander, Karl-Heinz, 40789 Monheim (DE); Hass, Carsten, 40489 Duesseldorf (DE); Nattermann, Till, 40210 Duesseldorf (DE); Buss, Markus, 40477 Duesseldorf (DE)
(74) Vertreter: Schmidt, Steffen J.

(56) Entgegenhaltungen:
- EP-A1- 2 036 791
- DE-A1-102004 032 728
- DE-A1-102006 043 122
- DE-A1-102013 001 228
- DE-A1-102014 223 000
- US-A1- 2004 090 117
- US-A1- 2010 235 099

## Beschreibung

### Hintergrund der Erfindung

Hier werden ein Steuerungssystem und ein Steuerungsverfahren zum Vermeiden einer Kollision bei einem Fahrspurwechsel mit einem vorausfahrenden Kraftfahrzeug offenbart. Dieses Steuerungssystem und Steuerungsverfahren basiert insbesondere auf einer Umfeldsensorik in dem eigenen Kraftfahrzeug und unterstützt einen Fahrer oder ein autonom fahrendes Kraftfahrzeug. Bei teilautonomen Kraftfahrzeugen und autonom gesteuerten Kraftfahrzeugen soll es die Sicherheit der Insassen des Kraftfahrzeugs erhöhen.

### Stand der Technik

Heutige Fahrassistenzsysteme (ADAS - advanced driver assistance systems) bieten in Kraftfahrzeugen eine Vielzahl von Überwachungs- und Hinweisfunktionen, um das Führen eines Kraftfahrzeugs sicherer zu machen. Hierbei wird das Umfeld des Kraftfahrzeugs basierend auf aus einem oder mehreren an dem Kraftfahrzeug befindlichen Umfeldsensor/en gewonnenen Umfelddaten im Hinblick auf den Fahrtverlauf des eigenen Kraftfahrzeugs überwacht.

Bekannte Fahrassistenzsysteme ermitteln beispielsweise, ob sich das Kraftfahrzeug innerhalb einer Fahrspur befindet und ob der Fahrer ungewollt zu einer Seite der Fahrspur abdriftet oder im Begriff ist, diese zu verlassen. Diese Fahrassistenzsysteme generieren aus den gewonnenen Umfelddaten ein "Abbild" der Straße und insbesondere der Fahrspur. Dabei werden Objekte erkannt und während des Fahrens verfolgt, wie zum Beispiel eine Bordsteinkante, Fahrspurbegrenzungslinien, Richtungspfeile, etc.

Auch sogenannte "Toter Winkel Überwacher" gehören zu heutigen Fahrassistenzsystemen. Diese ermitteln, beispielsweise mittels Radar, Lidar, Video oder Ähnlichem, ob sich ein anderes Kraftfahrzeug, ein Verkehrsteilnehmer oder ein Objekt seitlich und/oder hinter dem Kraftfahrzeug befindet, sodass ein Spurwechsel oder ein Abbiegen des eigenen Kraftfahrzeugs zu einer Kollision mit diesem führen könnte.

Ferner wird in sogenannten ACC-Systemen (Adaptive Cruise Control) eine automatische Geschwindigkeitsregelung des eigenen Kraftfahrzeugs an die Geschwindigkeit eines vorausfahrenden Kraftfahrzeugs angepasst. Dabei soll immer ein bestimmter Abstand zu dem vorausfahrenden Kraftfahrzeug eingehalten werden. Hierzu ermitteln derartige Systeme eine Bewegungsrichtung und/oder eine Geschwindigkeit des vorausfahrenden Kraftfahrzeugs, um zu vermeiden, dass das eigene Kraftfahrzeug den Weg des vorausfahrenden Kraftfahrzeugs so kreuzt, dass es zu einer kritischen Situation kommt. Dies betrifft einerseits Spurwechsel oder Abbiegevorgänge und andererseits die Vermeidung von Auffahrunfällen.

Bei einer Geschwindigkeitsregelung in einem Kraftfahrzeug, die den Abstand zu einem vorausfahrenden Kraftfahrzeug regelt, sowie bei einem Notbremsassistenten in einem Kraftfahrzeug handelt es sich um Fahrerassistenzsysteme, die auf andere Verkehrsteilnehmer reagieren, zum Beispiel andere Kraftfahrzeuge oder Fußgänger. Hierfür wird der relevanteste Verkehrsteilnehmer ausgewählt, um eine entsprechende Aktion auszuführen.

Diese sogenannte Streckenauswahl bzw. Zielauswahl geschieht häufig durch Schätzung der Trajektorie des eigenen Kraftfahrzeuges und Auswahl desjenigen Verkehrsteilnehmers, der sich auf dieser Trajektorie befindet. Die Schätzung der Trajektorie basiert generell auf dem Wissen über eine Geschwindigkeit und eine Gierrate des eigenen Kraftfahrzeugs, als auch auf anderen zur Verfügung stehenden Informationen, zum Beispiel Fahrbahnmarkierungen.

Eine Vorgehensweise bei Kollisionsvermeidungssystemen oder automatisiertem Fahren umfasst ein Berechnen einer Bahn oder Trajektorie für das eigene Kraftfahrzeuges und ein anschließendes Versuchen, das Fahrzeug entlang der Bahn/Trajektorie mit einem Regler zu führen. Allerdings wird bei der Planung die Dynamik des geschlossenen Regelkreises meist nicht korrekt berücksichtigt und der Entwurf der Fahrzeugregler ist aufwändig. Alternativ dazu wird gelegentlich ein modellprädiktives Verfahren eingesetzt, das beide Aspekte in einem Schritt löst und die Regeldynamik hinreichend genau berücksichtigt. Allerdings erfordert dies einen sehr hohen Rechenaufwand, der jedenfalls für absehbare Zeit nicht in Serienfahrzeugen vertretbar ist.

Eine weitere Herangehensweise ist ein modellprädiktives Trajektorienscharverfahren. Das liefert zwar nur eine suboptimale Lösung des Optimalsteuerungsproblems wegen seiner relativ groben Diskretisierung der Stellfolge. Hierbei wird jedoch die Planung und die Regelung in einem Schritt ausgeführt und ein dynamisches realistisches Modell explizit berücksichtigt.

In durch Personen geführten Kraftfahrzeugen bieten die Fahrassistenzsysteme meist eine Hinweisfunktion, um den Fahrer vor einer kritischen Situation oder einem entsprechenden Manöver zu warnen oder um dem Fahrer ein geeignetes Manöver für das eigene Kraftfahrzeug vorzuschlagen. Gleichermaßen können die Fahrassistenzsysteme auch in autonom gesteuerten Kraftfahrzeugen eingesetzt werden, um der autonomen Steuerung die entsprechenden Umfelddaten bereitzustellen.

In den Publikationen "Ein modellprädiktives Planungs- und Fahrzeugquerregelungsverfahren zur Kollisionsvermeidung durch Notausweichmanöver" von Keller, M., Haß, C., Seewald, A. und Bertram, T. in Automotive meets Electronics, 24.-25.02.2015, Dortmund, Februar 2015 und "A Model Predictive Approach to Emergency Maneuvers in Critical Traffic Situations" von Keller, M., Haß, C., Seewald, A. und Bertram, T. in IEEE Intelligent Transportation Systems Conference, Las Palmas de Gran Canaria, September 2015 ist technologischer Hintergrund hierzu erörtert.

Das Dokument DE 10 2014 223 000 A1, ist als nächstliegender Stand der Technik nach dem Oberbegriff der Ansprüche 1 und 3 zu sehen, betrifft ein Verfahren zur Kollisionsvermeidung von Fahrzeugen. Hierzu wird eine Vielzahl von Trajektorien ermittelt. Die Trajektorien werden im Hinblick auf ein Kollisionsrisiko des Fahrzeugs mit Objekten, welche durch eine Fahrzeugsensorik wahrgenommen bzw. ermittelt werden, beurteilt. Weiter offenbart das Dokument DE 10 2014 223 000 A1, dass im Falle einer möglicherweise bevorstehenden Kollision das Fahrzeug entlang einer ausgewählten Trajektorie geführt werden kann, um eine Kollision zu vermeiden.

### Zugrundeliegendes Problem

Auf Straßen mit mehreren Fahrspuren in einer Fahrtrichtung kann ein Spurwechsel eines Kraftfahrzeugs fatale Folgen haben, falls beim Spurwechsel des eigenen Kraftfahrzeugs das Verhalten eines vorausfahrenden Kraftfahrzeugs durch einen Fahrer oder ein Fahrerassistenzsystem des eigenen Kraftfahrzeugs, nicht richtig eingeschätzt, nicht richtig erkannt oder zu spät erkannt wird. Dies gilt zum Beispiel für eine Verlangsamung des vorausfahrenden Kraftfahrzeugs, an dem das in die Nachbarspur wechselnde eigene Kraftfahrzeug "hängen bleiben" könnte. Das spielt zum Beispiel eine Rolle, wenn das in die Nachbarspur wechselnde eigene Kraftfahrzeug meist von einer "langsameren" Fahrspur aus in eine "schnellere" Fahrspur (also z.B. in Kontinentaleuropa oder den USA von der rechten in die linke Spur). Beispielsweise können in Deutschland zwischen einem vorausfahrenden Kraftfahrzeug auf der "langsameren" Fahrspur und einem nachfolgenden Kraftfahrzeug auf der "schnelleren" Fahrspur hohe Geschwindigkeitsunterschiede vorherrschen, die das in die Nachbarspur wechselnde eigene Kraftfahrzeug aufholen muss, um zum Beispiel keine Behinderung von nachfolgenden Fahrzeugen in der schnelleren Fahrspur zu bilden.

Aufgrund eines solchen zu erreichenden Geschwindigkeitsunterschieds kann zum Beispiel ein Fehleinschätzen, ein nicht richtiges oder ein zu spätes Einleiten des Spurwechsels des eigenen Kraftfahrzeugs zur Kollision mit dem vorausfahrenden Kraftfahrzeug führen. Nur ein heftiges Abbremsen oder Ausweichen kann einen Auffahrunfall eventuell noch verhindern. Dies kann für dem eigenen Kraftfahrzeug nachfolgende Kraftfahrzeuge zu sonst nicht erforderlichen Bremsvorgängen und/oder Fahrmanövern des nachfolgenden Kraftfahrzeugs führen. Solche nicht erforderlichen Bremsvorgänge und/oder Fahrmanöver können auch sonstige Verkehrsteilnehmer gefährden und/oder den Fahrkomfort beeinträchtigen.

Es besteht daher die Aufgabe, ein Steuerungssystem und ein Steuerungsverfahren für ein Kraftfahrzeug bereitzustellen zum Führen des Kraftfahrzeuges entlang eines Pfades und zur Vermeiden einer Kollision bei einem Fahrspurwechsel mit einem vorausfahrenden Kraftfahrzeug.

### Vorgeschlagene Lösung

Diese Aufgabe wird gelöst durch ein Steuerungssystem bzw. Steuerungsverfahren mit den Merkmalen der jeweiligen unabhängigen Ansprüche.

Ein erfindungsgemäßes Steuerungssystem ist zu einem Einsatz in einem eigenen Kraftfahrzeug eingerichtet und basiert auf aus mindestens einem dem eigenen Kraftfahrzeug zugeordneten Umfeldsensor gewonnenen Umfelddaten um voraus-, neben- und nachfahrende Kraftfahrzeuge und vorausstehende Objekte zu erkennen. Der mindestens eine Umfeldsensor ist dazu eingerichtet, einer elektronischen Steuerung des Steuerungssystems einen Bereich vor, neben und hinter dem eigenen Kraftfahrzeug wiedergebende Umfelddaten bereitzustellen.

Das Steuerungssystem ist hierbei wenigstens dazu eingerichtet und bestimmt:
- ein am Verkehr teilnehmendes anderes Kraftfahrzeug relativ zu dem eigenen Kraftfahrzeug mittels des mindestens einen Umfeldsensors zu erfassen,
- Bewegungen des anderen Kraftfahrzeugs relativ (i) zu einer Fahrspur, auf der sich das andere Kraftfahrzeug oder das eigene Kraftfahrzeug befindet und relativ (ii) zum eigenen Kraftfahrzeug zu ermitteln,
- ausgehend von einem momentanen Ort des eigenen Kraftfahrzeugs, eine Schar mit vorgegebener Anzahl sich hinsichtlich ihrem Verlauf unterscheidender Trajektorien für mögliche Pfade des eigenen Kraftfahrzeugs zu ermitteln, wobei der Verlauf benachbarter Trajektorien sich um eine vorgegebene Differenz möglicher unterschiedlicher Lenkwinkel des eigenen Kraftfahrzeugs unterscheidet,
- den Verlauf der ermittelten Trajektorien für mögliche Pfade des eigenen Kraftfahrzeugs mit den bereitgestellten Umfelddaten in Relation zu setzen und die ermittelten Trajektorien als (i) Trajektorien mit Kollision, (ii) kollisionsfreie Trajektorien und (iii) optimale Trajektorie zu klassifizieren,
- eine momentan befahrene Trajektorie des eigenen Kraftfahrzeugs zu ermitteln und mit den klassifizierten Trajektorien zu vergleichen, und
- aus dieser Situations-Erkennung für das eigene Kraftfahrzeug eine Eingriffs-Entscheidung zu treffen, wenigstens ein Signal zu erzeugen, das einen Fahrer des eigenen Kraftfahrzeugs dabei unterstützt, das eigene Kraftfahrzeug zu steuern, um das eigene Kraftfahrzeug zumindest entlang einer kollisionsfreien Trajektorie zu führen.

Das Steuerungssystem ist dadurch gekennzeichnet, dass es dazu ausgebildet ist, das wenigstens eine Signal als eine intermittierende Lenkmomentüberlagerung und als eine intermittierende Bremsmomentüberlagerung beim eigenen Kraftfahrzeug einzuleiten, wobei aufeinanderfolgende einzelne Überlagerungen zeitlich so beabstandet sind, dass der Fahrer sie als gesonderten Eingriff im Sinne einer Lenkempfehlung wahrnimmt.

Optional kann das Signal als schneller ansteigender als abfallender Impuls ausgestaltet sein.

Ein erfindungsgemäßes Steuerungsverfahren ist zum Einsatz in einem eigenen Kraftfahrzeug eingerichtet und basiert auf aus mindestens einem dem eigenen Kraftfahrzeug zugeordneten Umfeldsensor gewonnenen Umfelddaten, um voraus-, neben- und nachfahrende Kraftfahrzeuge und vorausstehende Objekte zu erkennen. Der mindestens eine Umfeldsensor ist dazu eingerichtet, einer elektronischen Steuerung einen Bereich vor, neben und hinter dem eigenen Kraftfahrzeug wiedergebende Umfelddaten bereitzustellen.

Das Steuerungsverfahren ist hierbei wenigstens dazu eingerichtet und bestimmt:
- ein am Verkehr teilnehmendes anderes Kraftfahrzeug relativ zu dem eigenen Kraftfahrzeug mittels des mindestens einen Umfeldsensors zu erfassen,
- Bewegungen des anderen Kraftfahrzeugs relativ (i) zu einer Fahrspur, auf der sich das andere Kraftfahrzeug oder das eigene Kraftfahrzeug befindet und relativ (ii) zum eigenen Kraftfahrzeug zu ermitteln,
- ausgehend von einem momentanen Ort des eigenen Kraftfahrzeugs, eine Schar mit vorgegebener Anzahl sich hinsichtlich ihrem Verlauf unterscheidender Trajektorien für mögliche Pfade des eigenen Kraftfahrzeugs zu ermitteln, wobei der Verlauf benachbarter Trajektorien sich um eine vorgegebene Differenz möglicher unterschiedlicher Lenkwinkel des eigenen Kraftfahrzeugs unterscheidet,
- den Verlauf der ermittelten Trajektorien für mögliche Pfade des eigenen Kraftfahrzeugs mit den bereitgestellten Umfelddaten in Relation zu setzen und die ermittelten Trajektorien als (i) Trajektorien mit Kollision, (ii) kollisionsfreie Trajektorien und (iii) optimale Trajektorie zu klassifizieren,
- eine momentan befahrene Trajektorie des eigenen Kraftfahrzeugs zu ermitteln und mit den klassifizierten Trajektorien zu vergleichen, und
- aus dieser Situations-Erkennung für das eigene Kraftfahrzeug eine Eingriffs-Entscheidung zu treffen, wenigstens ein Signal zu erzeugen, das einen Fahrer des eigenen Kraftfahrzeugs dabei unterstützt, das eigene Kraftfahrzeug zu steuern, um das eigene Kraftfahrzeug zumindest entlang einer kollisionsfreien Trajektorien zu führen.

Das Verfahren ist hierbei dadurch gekennzeichnet, dass das Signal als eine intermittierende Lenkmomentüberlagerung und als eine intermittierende Bremsmomentüberlagerung beim eigenen Kraftfahrzeug einzuleiten ist, wobei aufeinanderfolgende einzelne Überlagerungen zeitlich so beabstandet sind, dass der Fahrer sie als gesonderten Eingriff im Sinne einer Lenkempfehlung wahrnimmt.

Optional kann das Signal als schneller ansteigender als abfallender Impuls ausgestaltet sein.

Weitere Beispiele für Steuerungssysteme bzw. Steuerungsverfahren sind wie nachfolgend beschrieben offenbart:
Ein Beispiel für ein Steuerungssystem, das zum Einsatz in einem eigenen Kraftfahrzeug eingerichtet und bestimmt ist, erkennt, basierend auf aus mindestens einem dem eigenen Kraftfahrzeug zugeordneten Umfeldsensor gewonnenen Umfelddaten vorausfahrende Kraftfahrzeuge und vorzugsweise vorausstehende Objekte. Dabei ist der mindestens eine Umfeldsensor dazu eingerichtet, einer elektronischen Steuerung des Steuerungssystems die einen Bereich vor dem eigenen Kraftfahrzeug wiedergebenden Umfelddaten bereitzustellen. Das Steuerungssystem ist wenigstens dazu eingerichtet und bestimmt, ausgehend von einem momentanen Ort, eine Schar mit vorgegebener Anzahl sich hinsichtlich ihrer Länge und/oder ihrem Verlauf unterscheidender Trajektorien für mögliche Pfade des eigenen Kraftfahrzeugs zu ermitteln, wobei der Verlauf benachbarter Trajektorien sich um eine vorgegebene Differenz möglicher unterschiedlicher Lenkwinkel des eigenen Kraftfahrzeugs unterscheidet, und die vorgegebene Anzahl der Trajektorien, die Länge und/oder den Verlauf der Trajektorien abhängig von einer Fahrsituation des eigenen Kraftfahrzeugs zu variieren. Das Steuerungssystem ist wenigstens dazu eingerichtet und bestimmt, wenigstens ein Signal zu erzeugen, das einen Fahrer des eigenen Kraftfahrzeugs dabei unterstützt, das eigene Kraftfahrzeug zu steuern, um das eigene Kraftfahrzeug entlang einer ausgewählten dieser Trajektorien zu führen, oder wenigstens einen zugehörigen Steuerbefehl zu erzeugen, der das eigene Kraftfahrzeug dazu veranlasst, einer ausgewählten dieser Trajektorien zu folgen. Die vorgegebene Anzahl der Trajektorien, die Länge und/oder den Verlauf der Trajektorien kann abhängig von folgenden Aspekten der Fahrsituation des eigenen Kraftfahrzeugs von dem dazu eingerichteten und bestimmten Steuerungssystem variiert werden: (i) der Geschwindigkeit des eigenen Kraftfahrzeugs, (ii) einem seitlichen, einem heckseitigen und/oder frontalen Abstand zu einem am Verkehr teilnehmenden anderen Kraftfahrzeug bezogen auf das eigene Kraftfahrzeug, (iii) einer Relativgeschwindigkeit zwischen einem am Verkehr teilnehmenden anderen Kraftfahrzeug und dem eigenen Kraftfahrzeug, und/oder (iv) einem Straßenverlauf vor dem eigenen Kraftfahrzeug.

Beim Ermitteln der Trajektorien für mögliche Pfade des eigenen Kraftfahrzeugs kann von dem dazu eingerichteten und bestimmten Steuerungssystem in einem ersten Diskretisierungsschritt (i) die Anzahl der Trajektorien auf eine erste Zahl von etwa 3 bis 15 vorzugeben sein, und/oder (ii) die Differenz möglicher unterschiedlicher Lenkwinkel des eigenen Kraftfahrzeugs gleich bleibend oder mit steigendem unterschiedlichem Lenkwinkel ansteigend vorzugeben sein.

Das Steuerungssystem kann ferner dazu eingerichtet und bestimmt sein, beim Ermitteln der Trajektorien für mögliche Pfade des eigenen Kraftfahrzeugs in einem folgenden Diskretisierungsschritt (i) die Anzahl der Trajektorien auf eine zweite, geringere Zahl von etwa 3 bis 5 vorzugeben, und/oder (ii) die Differenz möglicher unterschiedlicher Lenkwinkel des eigenen Kraftfahrzeugs zu verringern.

Gegenüber herkömmlichen Fahrerassistenzsystemen verbessert das hier beispielhaft vorgestellte Fahrerassistenzsystem ein risikoarmes Ausführen eines Spurwechsels des eigenen Kraftfahrzeugs relativ zu einem vorausfahrenden Kraftfahrzeug. Dabei wechselt das eigene Kraftfahrzeug vorzugsweise von einer "langsameren" Fahrspur auf eine "schnellere" Fahrspur. Dieses risikoarme Ausführen eines Spurwechsels wird insbesondere dadurch erreicht, dass das Steuerungssystem "falsche" oder "ungünstige" Trajektorien festzustellen in der Lage ist, und dazu eingerichtet ist, den Fahrer davon abhalten, diese "falschen" oder "ungünstigen" Trajektorien zu nutzen.

Auch kann das System den Fahrer lediglich dazu anregen, von momentan als kritisch eingeschätzten Trajektorien in eine weniger kritische, oder gar günstige, bis hin zu einer momentan optimalen Trajektorie zu wechseln. Damit ist die Anwendung des Systems nicht auf "Notsituationen" beschränkt, sondern kann in vielen Situationen eingesetzt werden. Eine (teil-) autonome Eingriffsmöglichkeit durch das System ist eine Lenkmomentenüberlagerung. Alternativ oder ergänzend kann dem Fahrer auch optisch, haptisch oder akustisch das Verlassen einer solchen, kritischen Trajektorie durch das System nahegelegt werden.

Ein System, welches in allen denkbaren Situationen, insbesondere z.B. Notsituationen in der Lage ist die "beste" Trajektorie zu bestimmen, hat einen erheblichen Aufwand an sensorischen und rechnerischen Ressourcen. Beispielsweise ist auf mehrspurigen Autobahnen eine sehr hohe Komplexität an Situationen abzuarbeiten. Auf Grund der fehlenden Informationen über alle möglichen Hindernistrajektorien ist ein Bestimmen der "besten" Trajektorie für das eigene Kraftfahrzeug in einer nicht zu vernachlässigenden Anzahl von Szenarien gar nicht möglich.

Daher beschreitet das hier vorgestellte System einen anderen Ansatz. Es geht nicht darum, das eigene Kraftfahrzeug auf die momentan als "die richtig" eingeschätzte Trajektorie zu bringen. Vielmehr wird das eigene Kraftfahrzeug von momentan als "falsch" eingeschätzten Trajektorien abgebracht.

Das hier beispielhaft vorgestellte System stellt "falsche" oder "ungünstige" Trajektorien fest und (i) signalisiert dies dem Fahrer oder (ii) greift (teil-)autonom in das Fahrverhalten zum Beispiel durch Brems- oder Lenkmomentüberlagerung beim eigenen Kraftfahrzeug ein.

Damit ist die Anwendung des Systems nicht auf Notsituationen beschränkt, sondern kann in vielen Situationen eingesetzt werden. Es ist auch denkbar weitere Stellgrößen zu verwenden, als nur die Lenkmomentüberlagerung.

Dazu dient beispielhaft ein Steuerungssystem, das zum Einsatz in einem eigenen Kraftfahrzeug eingerichtet und bestimmt ist, basierend auf aus mindestens einem dem eigenen Kraftfahrzeug zugeordneten Umfeldsensor gewonnenen Umfelddaten vorausfahrende Kraftfahrzeuge und vorzugsweise vorausstehende Objekte zu erkennen, wobei der mindestens eine Umfeldsensor dazu eingerichtet ist, einer elektronischen Steuerung des Steuerungssystems die einen Bereich vor, neben und/oder hinter dem eigenen Kraftfahrzeug wiedergebenden Umfelddaten bereitzustellen, und wobei das Steuerungssystem wenigstens dazu eingerichtet und bestimmt ist, ein am Verkehr teilnehmendes anderes Kraftfahrzeug vor dem eigenen Kraftfahrzeug mittels des mindestens einen Umfeldsensors erfassen, Bewegungen des anderen Kraftfahrzeugs relativ (i) zu einer Fahrspur, auf der sich das andere Kraftfahrzeug oder das eigene Kraftfahrzeug befindet, oder (ii) zum eigenen Kraftfahrzeug ermitteln. Ausgehend von einem momentanen Ort, ermittelt das Steuerungssystem eine Schar mit vorgegebener Anzahl sich hinsichtlich ihrer Länge und/oder ihrem Verlauf unterscheidender Trajektorien für mögliche Pfade des eigenen Kraftfahrzeugs, wobei der Verlauf benachbarter Trajektorien sich um eine vorgegebene Differenz möglicher unterschiedlicher Lenkwinkel des eigenen Kraftfahrzeugs unterscheidet.

Das beispielhafte Steuerungssystem ist dazu eingerichtet und bestimmt, den Verlauf der ermittelten Trajektorien für mögliche Pfade des eigenen Kraftfahrzeugs mit den bereitgestellten Umfelddaten in Relation zu setzen und die ermittelten Trajektorien als (i) Trajektorien mit Kollision, (ii) kollisionsfreie Trajektorien, und/oder (iii) optimale Trajektorie zu klassifizieren, eine momentan befahrene Trajektorie des eigenen Kraftfahrzeugs zu ermitteln und mit den klassifizierten Trajektorien zu vergleichen, und aus dieser Situations-Erkennung für das eigene Kraftfahrzeug eine Eingriffs-Entscheidung zu treffen, wenigstens ein Signal zu erzeugen, das einen Fahrer des eigenen Kraftfahrzeugs dabei unterstützt, das eigene Kraftfahrzeug zu steuern, um das eigene Kraftfahrzeug zumindest entlang einer kollisionsfreien Trajektorien zu führen, oder wenigstens einen zugehörigen Steuerbefehl zu erzeugen, der das eigene Kraftfahrzeug dazu veranlasst, zumindest einer der kollisionsfreien Trajektorien zu folgen.

Das beispielhafte Steuerungssystem ist dazu eingerichtet und bestimmt, das Signal eine intermittierende Brems- oder Lenkmomentüberlagerung beim eigenen Kraftfahrzeug einleitet, wobei aufeinanderfolgende einzelne Überlagerungen zeitlich so beabstandet sind, dass der Fahrer sie als gesonderter Eingriff im Sinne einer Lenkempfehlung oder Richtungsinformation wahrnimmt.

In einer Variante ist das Signal als schneller ansteigender als abfallender Impuls ausgestaltet ist. Ein Sägezahnimpuls ist eine mögliche Signalform, damit der Fahrer den Impuls deutlich als Brems- oder Lenkmomentüberlagerung beim eigenen Kraftfahrzeug verspürt. Es sind aber auch andere Impulsformen möglich.

Diese Systemvarianten erlauben eine Kollisionsvermeidung in Notsituationen, erkennen eindeutige Fahrerfehler, zum Beispiel wenn der Fahrer das eigene Kraftfahrzeug in ein Hindernis lenkt oder das eigene Kraftfahrzeug destabilisiert, erfolgt eine Signalabgabe zur Warnung des Fahrers oder unmittelbar eine Brems- oder Lenkmomentüberlagerung beim eigenen Kraftfahrzeug. Wenn zum Beispiel bei Rechtsverkehr auf einer kurvigen Landstraße der Fahrer eine enge Linkskurve schneidet und mit einem entgegenkommenden Fahrzeug zu kollidieren droht, erfolgt eine Signalabgabe zur Warnung des Fahrers oder unmittelbar eine Brems- oder Lenkmomentüberlagerung beim eigenen Kraftfahrzeug. Wenn zum Beispiel der Fahrer eine Kurve schneidet und den Bordstein zu touchieren droht, erfolgt eine Signalabgabe zur Warnung des Fahrers oder unmittelbar eine Brems- oder Lenkmomentüberlagerung beim eigenen Kraftfahrzeug. Wenn zum Beispiel der Fahrer auf der Autobahn zum Überholen ansetzt und den Verkehr in der Nebenspur übersieht, erfolgt eine Signalabgabe zur Warnung des Fahrers oder unmittelbar eine Brems- oder Lenkmomentüberlagerung beim eigenen Kraftfahrzeug.

Dies erlaubt eine Erhöhung der Fahrsicherheit und des Fahrkomforts, indem bei einem Fahrspurwechsel des eigenen Kraftfahrzeug wegen eines vorausfahrenden anderen Kraftfahrzeugs mögliche Probleme korrekt und rechtzeitig erkannt wird und so zur Vermeidung eines Unfalls eine Geschwindigkeitsanpassung und/oder ein Fahrmanöver des eigenen Kraftfahrzeugs entweder durch den Fahrer oder ein Fahrerassistenzsystem ausgeführt werden kann.

Dabei kann eine adaptive Stellgrößendiskretisierung bei der Festlegung der Trajektorien durch das System vorgenommen werden, welche einen wichtigen Aspekt für die Realisierung im Kraftfahrzeug darstellt. Bei einer festen Diskretisierung können die Trajektorien nur starre, diskrete Krümmungsradien oder Trajektorienlängen haben, entlang derer das eigenen Kraftfahrzeug gefahren wird. Wenn zum Beispiel das eigene Kraftfahrzeug eine Autobahnabfahrt mit einem Krümmungsradius der Fahrbahn befährt, der nicht zufällig Teil der diskreten Menge an möglichen Krümmungsradien der Trajektorien ist, muss zwischen zwei - nicht passenden - Krümmungsradien der Trajektorien ständig hin und her geschaltet werden um den Krümmungsradius der Fahrbahn zumindest anzunähern. Dabei entstehen Schwingungen im eigenen Kraftfahrzeug und damit ein unbrauchbares Fahrverhalten.

Bei der hier vorgestellten adaptiven Diskretisierung wird in einem ersten Diskretisierungsschritt der aktuell mögliche oder gebrauchte Stellbereich der Trajektorie des eigenen Kraftfahrzeugs vorgegeben. Dann wird in einem zweiten Diskretisierungsschritt feiner diskretisiert. Dieses zweistufige Konzept erlaubt ein nahezu quasikontinuierliches Nachregeln. Somit lässt sich mit vergleichsweise geringem Rechenaufwand und damit sehr schnell praktisch jeder beliebige Krümmungsradius der zu befahrenden Trajektorie realisieren.

Mittels des Steuerungssystems kann beim Fahrspurwechsel des eigenen Kraftfahrzeugs im Gegensatz zu herkömmlichen Fahrassistenzsystemen eine Fehleinschätzung eines unsteten Fahrverhaltens des anderen Kraftfahrzeugs vermieden oder zumindest verringert werden. Ermittelt das Steuerungssystem beispielsweise eine seitliche Bewegung des anderen Kraftfahrzeugs relativ zu der zugehörigen Fahrspur, auf der sich das andere Kraftfahrzeug befindet, kann dies bei der Festlegung möglicher Trajektorien als "kritisch" berücksichtigt werden. Sollte der Fahrer des eigenen Kraftfahrzeugs eine dieser Trajektorien einschlagen, wird im dies als ungünstig signalisiert; in einem weitergehenden Szenario greift die Steuerung in das Lenk- / Fahrgeschehen ein.

Dabei ist in einer Variante das Steuerungssystem ferner dazu eingerichtet und bestimmt, ein Signal auszugeben, das geeignet ist, einem Fahrer des eigenen Kraftfahrzeugs vor kritischen Trajektorien zu warnen. Somit kann das Steuerungssystem den Fahrer des eigenen Kraftfahrzeugs dabei unterstützen, geeignete Maßnahmen zu ergreifen. Darüber hinaus oder alternativ dazu kann das Signal dazu geeignet sein, eine autonome Trajektorienanpassung und/oder Geschwindigkeitsanpassung des eigenen Kraftfahrzeugs durchzuführen und/oder bei einem autonomen Fahrspurwechsel bzw. autonomen Fahrmanöver des eigenen Kraftfahrzeugs zu berücksichtigen.

Die eigene Fahrspur sowie die weitere Fahrspur kann das Steuerungssystem beispielsweise anhand von Umfeldmerkmalen ermitteln, wie beispielsweise Fahrspurbegrenzungen und/oder Fahrspurmarkierungen. Diese Umfeldmerkmale kann das Steuerungssystem ebenfalls basierend auf aus den mittels des mindestens einen Umfeldsensors gewonnenen Umfelddaten erkennen. Ferner kann das Steuerungssystem die Umfeldmerkmale auch von einem externen System zur Verfügung gestellt bekommen, wie beispielsweise von einem GPS-System.

Des Weiteren kann das Steuerungssystem dazu eingerichtet und bestimmt sein, das am Verkehr teilnehmende andere Kraftfahrzeug mittels des mindestens einen Umfeldsensors über eine vorbestimmte Zeitspanne oder kontinuierlich zu erfassen, um die seitliche Bewegung des anderen Kraftfahrzeugs zu ermitteln. Hierdurch kann das Steuerungssystem zuverlässiger bestimmen, ob eine aktuelle seitliche Bewegung des anderen Kraftfahrzeugs einen Spurwechsel bedeutet oder ob diese aktuelle seitliche Bewegung des anderen Kraftfahrzeugs in dem individuellen Fahrverhalten des Fahrers des anderen Kraftfahrzeugs begründet ist.

Die seitliche Bewegung des anderen Kraftfahrzeugs kann anhand von Positionswerten und/oder seitlichen Geschwindigkeitswerten ermittelt werden.

Das Steuerungssystem kann ferner dazu eingerichtet und bestimmt sein, zum Ermitteln der seitlichen Bewegung des anderen Kraftfahrzeugs, während der vorbestimmten Zeitspanne oder kontinuierlich eine Änderung eines Abstands zwischen einer Längsachse des anderen Kraftfahrzeugs und einer Mittellinie, wenigstens einer Fahrspurbegrenzung oder wenigstens einer Fahrspurmarkierung der zugehörigen Fahrspur zu ermitteln, auf der sich das andere Kraftfahrzeug befindet. Die Mittellinie sowie die Fahrspurbegrenzung der zugehörigen Fahrspur kann dabei eine virtuelle, von dem Steuerungssystem bestimmte aktuelle Mittellinie bzw. aktuelle Fahrspurbegrenzung der zugehörigen Fahrspur sein. Gleichermaßen kann das Steuerungssystem während der vorbestimmten Zeitspanne oder kontinuierlich eine Änderung des Abstands zwischen einer Längsachse des anderen Kraftfahrzeugs und einer virtuellen oder realen Fahrspurmarkierung oder Fahrspurbegrenzung ermitteln, auf der sich das eigene Kraftfahrzeug befindet.

In einer Weiterbildung kann das Steuerungssystem dazu eingerichtet und bestimmt sein, zum Ermitteln der aktuellen Verkehrssituation am Verkehr teilnehmende weitere Kraftfahrzeuge und/oder Objekte vor dem eigenen Kraftfahrzeug mittels des mindestens einen Umfeldsensors zu erfassen. Diese weiteren Kraftfahrzeuge und oder Objekte können sich in Abhängigkeit des verwendeten Umfeldsensors sowohl in einem Bereich unmittelbar vor dem eigenen Kraftfahrzeug als auch in einem Bereich in weiterer Entfernung befinden. Es versteht sich, dass auch mehrere Umfeldsensoren in dem Steuerungssystem eingesetzt werden können, um das andere Kraftfahrzeug, weitere Kraftfahrzeuge, Objekte und oder sonstige den Umfelddaten zugrunde liegende Umfeldmerkmale zu erfassen.

Das Steuerungssystem kann auch feststellen, dass sich keine weiteren Kraftfahrzeuge und/oder Objekte vor, seitlich und/oder hinter dem eigenen Kraftfahrzeug befinden.

Das Steuerungssystem kann dazu eingerichtet und bestimmt sein, zum Ermitteln der aktuellen Verkehrssituation eine Distanz zwischen dem anderen Kraftfahrzeug und einem vor dem anderen Kraftfahrzeug befindlichen weiteren Kraftfahrzeug oder Objekt sowie eine Geschwindigkeitsdifferenz zwischen dem anderen Kraftfahrzeug und dem vor dem anderen Kraftfahrzeug befindlichen weiteren Kraftfahrzeug oder Objekt zu ermitteln, wobei sich das andere Kraftfahrzeug und das vor dem anderen Kraftfahrzeug befindliche weitere Kraftfahrzeug oder Objekt auf derselben oder einer benachbarten Fahrspur befinden.

Ist beispielsweise die ermittelte Distanz gering, während die ermittelte Geschwindigkeitsdifferenz hoch ist, wird bei der hier vorgestellten adaptiven Diskretisierung wird in einem ersten Diskretisierungsschritt der aktuell mögliche oder gebrauchte Stellbereich der Trajektorie des eigenen Kraftfahrzeugs vorgegeben. Dann wird in einem zweiten Diskretisierungsschritt feiner diskretisiert. Das erlaubt ein nahezu quasikontinuierliches Nachregeln. Somit lässt sich mit vergleichweise geringem Rechenaufwand und damit sehr schnell praktisch eine ausreichende Auswahl an für die momentane Fahrsituation des eigenen Kraftfahrzeugs risikoarmen Trajektorien ermitteln.

Das Steuerungssystem kann dazu eingerichtet und bestimmt sein, zum Ermitteln der aktuellen Verkehrssituation eine Distanz zwischen dem anderen Kraftfahrzeug und einem vor dem anderen Kraftfahrzeug befindlichen versetzten Kraftfahrzeug oder Objekt sowie eine Geschwindigkeitsdifferenz zwischen dem anderen Kraftfahrzeug und dem vor dem anderen Kraftfahrzeug befindlichen versetzten Kraftfahrzeug oder Objekt zu ermitteln, wobei sich das andere Kraftfahrzeug und das vor dem anderen Kraftfahrzeug befindliche versetzte Kraftfahrzeug oder Objekt auf unterschiedlichen Fahrspuren befinden. Beispielsweise kann sich das versetzte Kraftfahrzeug oder Objekt auf derselben Fahrspur wie das eigene Kraftfahrzeug befinden. Kurzbeschreibung der Zeichnung

Weitere Ziele, Merkmale, Vorteile und Anwendungsmöglichkeiten ergeben sich aus der nachfolgenden Beschreibung von nicht einschränkend zu verstehenden Beispielen mit Bezug auf die zugehörigen Zeichnungen. Dabei zeigen alle beschriebenen und/oder bildlich dargestellten Merkmale für sich oder in beliebiger Kombination den hier offenbarten Gegenstand. Die Abmessungen und Proportionen der in den Figuren gezeigten Komponenten sind hierbei nicht maßstäblich.

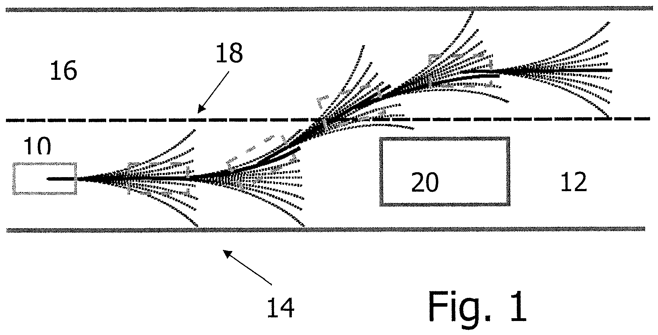

- Figur 1: zeigt schematisch ein eigenes Kraftfahrzeug, in dem mittels eines ersten Beispiels für ein Steuerungssystem in einem Bereich vor dem eigenen Kraftfahrzeug erfasst eine Folge von Trajektorienscharen errechnet wird, aus denen jeweils eine Trajektorie für einen Abschnitt den Fahrpfad des eigenen Kraftfahrzeugs festlegt.

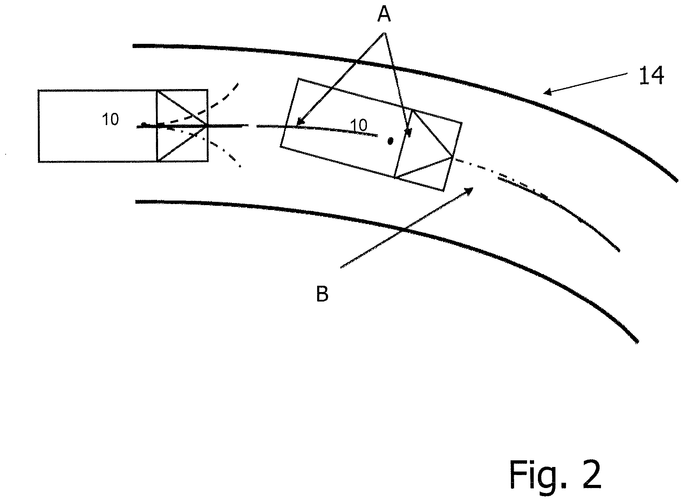

- Figur 2: zeigt schematisch das eigene Kraftfahrzeug, in dem ein zweites Beispiel für ein Steuerungssystem eine Folge von Trajektorien und zugehörige Signale oder Steuerbefehle zum Überholen eines vorausfahrenden Kraftfahrzeugs erzeugt und beim Ermitteln der Trajektorien für mögliche Fahrpfade des eigenen Kraftfahrzeugs zweischrittig adaptiv diskretisierend vorgeht.

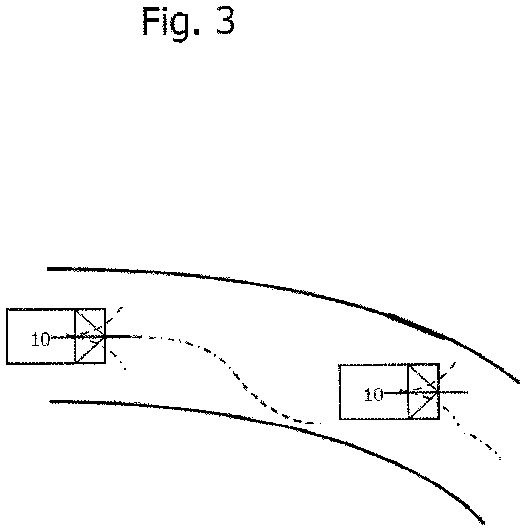

- Figur 3: zeigt schematisch das eigene Kraftfahrzeug, in dem ein Beispiel für ein Steuerungssystem nur wenige unterschiedliche linear unterschiedliche Trajektorien ermittelt.

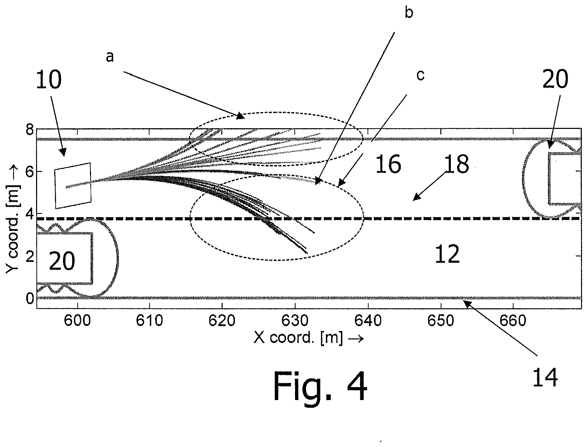

- Figur 4: zeigt schematisch das eigene Kraftfahrzeug, in ein Beispiel für ein Steuerungssystem ausgehend von einem momentanen Ort des eigenen Kraftfahrzeugs eine Schar mit vorgegebener Anzahl sich hinsichtlich ihrer Länge und/oder ihrem Verlauf unterscheidender Trajektorien für mögliche Pfade des eigenen Kraftfahrzeugs ermittelt.

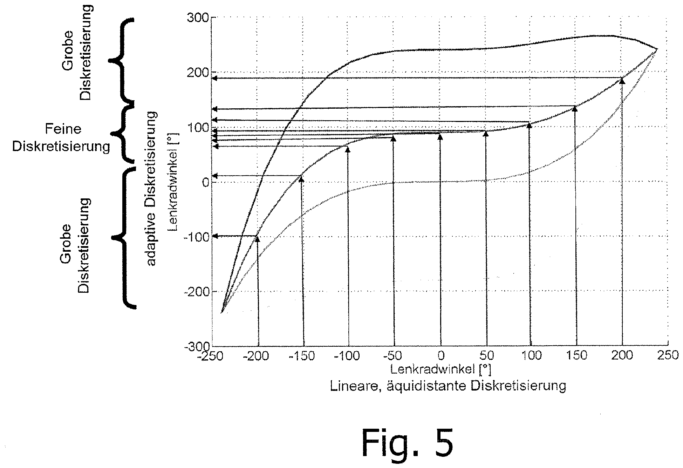

- Figur 5: zeigt in einem Diagramm den unterschiedlichen Effekt einer linearen, äquidistante Diskretisierung und der zwei- oder mehrschrittigen adaptiven Diskretisierung zur Berechnung der Trajektorienschar für mögliche Fahrpfade des eigenen Kraftfahrzeugs.

### Detaillierte Beschreibung der Zeichnungen

Figur 1 zeigt schematisch ein eigenes Kraftfahrzeug 10, das sich auf rechten Fahrspur 12 einer Fahrbahn 14 befindet. Benachbart zu der rechten Fahrspur 12 befindet sich eine weitere, linke Fahrspur 16 der Fahrbahn 14. Dabei sind die rechte Fahrspur 12 und die linke Fahrspur 16 der Fahrbahn 14 durch eine strichlierte Fahrbahnmarkierung 18 voneinander getrennt.

Das eigene Kraftfahrzeug 10 weist mindestens einen dem eigenen Kraftfahrzeug 10 zugeordneten und an diesem angebrachten Umfeldsensor (nicht gezeigt) auf. Der Umfeldsensor kann beispielsweise in Form einer Kamera ausgebildet sein, jedoch ist auch der Einsatz sonstiger bekannter Umfeldsensoren (Radar, Lidar, Ultraschall, ...) möglich. Der mindestens eine Umfeldsensor ist dazu eingerichtet, einen Bereich vor dem eigenen Kraftfahrzeug 10 zu erfassen und die diesen Bereich wiedergegebenen Umfelddaten einer elektronischen Steuerung (nicht gezeigt) eines in dem eigenen Kraftfahrzeug 10 installierten Steuerungssystems (nicht gezeigt) bereitzustellen. In dem in Figur 1 gezeigten Beispiel erfasst ein erstes Steuerungssystem mittels des mindestens einen Umfeldsensors das andere Kraftfahrzeug 20. Das eigene Kraftfahrzeug 10 fährt mit einer Geschwindigkeit auf das andere Kraftfahrzeug 20 auf, die höher ist als die Geschwindigkeit des anderen Kraftfahrzeugs 20. Aus diesem Grund führt das eigene Kraftfahrzeug 10 in der in Figur 1 gezeigten Situation einen Spurwechsel von der rechten Fahrspur entlang einer Folge von Trajektorien 30 auf die linke Fahrspur aus.

Nachstehend wird erläutert, wie die gefahrene Folge von Trajektorien 30 durch das Steuerungssystem zustande kommt.

Das Steuerungssystem erfasst ein oder mehrere am Verkehr teilnehmende andere Kraftfahrzeuge 20 vor dem eigenen Kraftfahrzeug 10 mittels des mindestens einen Umfeldsensors und ermittelt Bewegungen des anderen Kraftfahrzeugs 20 relativ zu einer Fahrspur 12, 16, auf der sich das andere Kraftfahrzeug 20 oder das eigene Kraftfahrzeug 10 befindet, oder (ii) zum eigenen Kraftfahrzeug 10. Ausgehend von einem momentanen Ort des eigenen Kraftfahrzeugs 10 ermittelt das Steuerungssystem eine Schar mit vorgegebener Anzahl sich hinsichtlich ihrer Länge und/oder ihrem Verlauf unterscheidender Trajektorien für mögliche Pfade des eigenen Kraftfahrzeugs 10. Der Verlauf benachbarter Trajektorien unterscheidet sich um eine vorgegebene Differenz möglicher unterschiedlicher Lenkwinkel des eigenen Kraftfahrzeugs 10. Dieser Vorgang wird in einer Variante des Steuerungssystems etwa alle 20 ms ausgeführt, wobei in dieser Zeitspanne etwa 15 mögliche Trajektorien errechnet werden.

Ausgehend von der jeweils auf diese Weise ermittelten Schar der Trajektorien wird deren vorgegebene Anzahl, ihre Länge und/oder deren Verlauf abhängig von einer Fahrsituation des eigenen Kraftfahrzeugs 10 variiert.

Dieses Variieren erfolgt in dem Steuerungssystem abhängig von folgenden Aspekten der Fahrsituation des eigenen Kraftfahrzeugs 10:
(i) der Geschwindigkeit des eigenen Kraftfahrzeugs 10 - je höher die Geschwindigkeit des eigenen Kraftfahrzeugs, desto länger ist die einzelne errechnete Trajektorie der Schar;
(ii) einem seitlichen, einem heckseitigen und/oder frontalen Abstand zu einem am Verkehr teilnehmenden anderen Kraftfahrzeug 20 bezogen auf das eigene Kraftfahrzeug 10 - je geringer der Abstand, desto kleiner ist der Winkelabstand zwischen benachbarten Trajektorien der Schar;
(iii) einer Relativgeschwindigkeit zwischen dem anderen Kraftfahrzeug 20 und dem eigenen Kraftfahrzeug 10 - je höher die Relativgeschwindigkeit, desto länger ist die einzelne errechnete Trajektorie der Schar und desto kleiner ist der Winkelabstand zwischen benachbarten Trajektorien der Schar; und/oder
(iv) einem Straßenverlauf vor dem eigenen Kraftfahrzeug 10 - je kleiner der Kurvenradius, desto kürzer ist die einzelne errechnete Trajektorie der Schar und desto kleiner ist der Winkelabstand zwischen benachbarten Trajektorien der Schar.

In einer Variante geht das Steuerungssystem beim Ermitteln der Trajektorien für mögliche Pfade des eigenen Kraftfahrzeugs 10 zweischrittig vor (Siehe Fig. 2) In einem ersten Diskretisierungsschritt wird
(i) die Anzahl der Trajektorien auf etwa 3 bis 15 vorgegeben und
(ii) die Differenz möglicher unterschiedlicher Lenkwinkel des eigenen Kraftfahrzeugs 10 bleibt gleich oder ist mit steigendem unterschiedlichem Lenkwinkel ansteigend vorgegeben. Dabei wird angenommen, dass größere Lenkwinkel (zum Beispiel > +/- 20°) unwahrscheinlicher einzuschlagen sind, als kleinere Lenkwinkel (zum Beispiel < +/- 20°).

In einem folgenden Diskretisierungsschritt verringert das Steuerungssystem beim Ermitteln der Trajektorien für mögliche Pfade des eigenen Kraftfahrzeugs 10 (i) die Anzahl der Trajektorien auf etwa 3 bis 5, und (ii) die Differenz möglicher unterschiedlicher Lenkwinkel des eigenen Kraftfahrzeugs 10 auf etwa 2°.

Basierend auf diesen Trajektoriendaten erzeugt das Steuerungssystem wenigstens ein Signal, das einen Fahrer des eigenen Kraftfahrzeugs dabei unterstützt, das eigene Kraftfahrzeug zu steuern, um das eigene Kraftfahrzeug 10 entlang einer ausgewählten dieser Trajektorien zu führen, oder wenigstens einen zugehörigen Steuerbefehl erzeugt, der das eigene Kraftfahrzeug 10 dazu veranlasst, einer ausgewählten dieser Trajektorien zu folgen. Mit anderen Worten: Im ersten Schritt wird die Kurve annähernd realisiert (A in Fig. 2). Im nächsten Schritt wird dann um diese annähernde Lösung herum kleinschrittig diskretisiert. Die Diskretisierung "konvergiert" in den benötigten Lenkwinkel. Dadurch kann jede fahrbare Krümmung stationär ohne zwischen nur annähernd passenden Krümmungsradien hin und her zu schalten realisiert werden (B in Fig. 2)

Der vorteilhafte Effekt dieser Vorgehensweise wird angesichts der Situation in Fig. 2 im Vergleich zu Fig. 3 deutlich. Falls das Steuerungssystem des eigenen Kraftfahrzeugs 10 nur wenige unterschiedliche Trajektorien ermittelt, wie dies in Fig. 3 gezeigt ist, müssen diese Trajektorien, um für alle Eventualitäten gerüstet zu sein, eine relativ große Differenz (hier von etwa 35°) benachbarter möglicher Lenkwinkel des eigenen Kraftfahrzeugs 10 vorsehen. Beim Befahren einer Kurve ist es höchst unwahrscheinlich, dass einer der vorgegebenen Lenkwinkel genau zu der Krümmung der Kurve passt. Deshalb muss das Steuerungssystem des eigenen Kraftfahrzeugs 10 in Abständen mit einem anderen der vorgegebenen Lenkwinkel nachregeln. Damit würde das eigene Kraftfahrzeug 10 schlingernd die Kurve durchfahren. (siehe Fig. 3)

Mit anderen Worten: Unten den drei möglichen Trajektorien findet sich keine, die exakt den Straßenverlauf realisiert. Es muss immer wieder zwischen zwei Lösungen hin und her geschaltet werden.

Wie in Fig. 4 veranschaulicht, ermittelt das Steuerungssystem des eigenen Kraftfahrzeugs 10 ausgehend von einem momentanen Ort des eigenen Kraftfahrzeugs 10 eine Schar mit vorgegebener Anzahl sich hinsichtlich ihrer Länge und/oder ihrem Verlauf unterscheidender Trajektorien für mögliche Pfade des eigenen Kraftfahrzeugs 10. Der Verlauf benachbarter Trajektorien unterscheidet sich um eine vorgegebene Differenz möglicher unterschiedlicher Lenkwinkel des eigenen Kraftfahrzeugs. Im Beispiel von Fig. 4 sind dies jeweils etwa 4°. Des Weiteren setzt das Steuerungssystem des eigenen Kraftfahrzeugs 10 den Verlauf der ermittelten Trajektorien für mögliche Pfade des eigenen Kraftfahrzeugs 10 mit den bereitgestellten Umfelddaten in Relation. Wenn eine der Trajektorien mit Objekten (anderen Fahrzeugen, Straßenbegrenzungen, oder dergl.) kollidiert, wird sie als Trajektorie mit Kollision klassifiziert. Trifft eine Trajektorie über ihre Länge nicht mit einem Objekt zusammen, wird sie als kollisionsfreie Trajektorie klassifiziert. Als Ergebnis dieses Vorgangs werden alle ermittelten Trajektorien als (i) Trajektorien mit Kollision, (ii) kollisionsfreie Trajektorien, und/oder (iii) optimale Trajektorie klassifiziert, wie dies in Fig. 4 veranschaulicht ist.

Dabei bezeichnet a: Wird das eigene Kraftfahrzeug auf einer dieser Trajektorien geführt, wird des kollidieren; b: Optimale Trajektorie; c: Kollisionsfreie Trajektorien.

Dabei ist es nicht zwingend, dass auch eine Trajektorie als optimale Trajektorie klassifiziert wird. Vielmehr reicht auch schon die Unterscheidung in Trajektorien mit Kollision und kollisionsfreie Trajektorien.

Anschließend ermittelt das Steuerungssystem des eigenen Kraftfahrzeugs 10 eine/die momentan befahrene Trajektorie des eigenen Kraftfahrzeugs 10 und vergleicht sie mit den klassifizierten Trajektorien. Ausgehend von dieser Situations-Erkennung für das eigene Kraftfahrzeug 10 trifft das Steuerungssystem des eigenen Kraftfahrzeugs 10 eine Eingriffs-Entscheidung, wenigstens ein Signal zu erzeugen, das einen Fahrer des eigenen Kraftfahrzeugs 10 dabei unterstützt, das eigene Kraftfahrzeug 10 zu steuern, um es zumindest entlang einer der kollisionsfreien Trajektorien zu führen. In einem (teil-)autonomen Fahrbetrieb wird wenigstens einen zugehöriger Steuerbefehl erzeugt, der das eigene Kraftfahrzeug 10 dazu veranlasst, zumindest einer der kollisionsfreien Trajektorien zu folgen.

Das Signal ist in einer Variante des Steuerungssystems als eine intermittierende Brems- oder Lenkmomentüberlagerung beim eigenen Kraftfahrzeug ausgestaltet, die durch geeignete Aktoren (nicht veranschaulicht) einem Lenkgetriebe oder einer Fahrzeugbremsanlage eingesteuert wird. Dabei sind in einer Ausgestaltung des Steuerungssystems aufeinanderfolgende einzelne Überlagerungen zeitlich so beabstandet, dass der Fahrer sie am Lenkrad als gesonderten Eingriff im Sinne einer Lenkempfehlung oder Richtungsinformation wahrnimmt.

In Fig. 5 ist der Unterschied zwischen einer linearen, äquidistanten Diskretisierung des Lenkradwinkels und einer adaptiven Diskretisierung des Lenkradwinkels veranschaulicht. In diesem Beispiel sind im Abstand von 50° von -200° bis +200° 10 diskrete Lenkwinkel veranschaulicht. Sofern in einer Lenksituation ein Lenkwinkel von 90° benötigt würde, würde bei einer linearen, äquidistanten Diskretisierung des Lenkradwinkels ein nächster Lenkradwinkel von 100° eingesteuert, aber auch die Trajektorien der anderen 10 diskreten Lenkradwinkel zwischen -200° bis +200° errechnet. Bei der hier vorgestellten adaptiven Diskretisierung des Lenkradwinkels werden im nächsten Schritt die 10 diskreten Lenkradwinkel zwischen -100° bis +100° errechnet, wobei in der Nähe des aktuellen Lenkradwinkels von 90° mehr Trajektorien errechnet werden, als weiter weg davon. Eine Trajektorie wird bei -100°, eine nahe 0° und eine nahe 200° errechnet; nahe des aktuellen Lenkradwinkels von 90° werden 6 unterschiedliche, dicht beieinander liegende Trajektorien errechnet. Diese Vorgehensweise erlaubt eine sehr effiziente Bestimmung kollisionsfreier Trajektorien, auf die das Steuerungssystem durch Abgabe entsprechender Signale zum Beispiel zur Lenkmomentüberlagerung hinwirken kann.

## Patentansprüche

1. Ein Steuerungssystem, das zum Einsatz in einem eigenen Kraftfahrzeug (10) eingerichtet und bestimmt ist, basierend auf aus mindestens einem dem eigenen Kraftfahrzeug (10) zugeordneten Umfeldsensor gewonnenen Umfelddaten voraus-, neben- und nachfahrende Kraftfahrzeuge und vorausstehende Objekte zu erkennen, wobei der mindestens eine Umfeldsensor dazu eingerichtet ist, einer elektronischen Steuerung des Steuerungssystems die einen Bereich vor, neben und hinter dem eigenen Kraftfahrzeug wiedergebenden Umfelddaten bereitzustellen, und wobei das Steuerungssystem wenigstens dazu eingerichtet und bestimmt ist,
- ein am Verkehr teilnehmendes anderes Kraftfahrzeug (20) relativ zu dem eigenen Kraftfahrzeug (10) mittels des mindestens einen Umfeldsensors zu erfassen,
- Bewegungen des anderen Kraftfahrzeugs (20) relativ (i) zu einer Fahrspur, auf der sich das andere Kraftfahrzeug (20) oder das eigene Kraftfahrzeug (10) befindet und relativ (ii) zum eigenen Kraftfahrzeug (10) zu ermitteln,
- ausgehend von einem momentanen Ort des eigenen Kraftfahrzeugs (10), eine Schar mit vorgegebener Anzahl sich hinsichtlich ihrem Verlauf unterscheidender Trajektorien für mögliche Pfade des eigenen Kraftfahrzeugs (10) zu ermitteln, wobei der Verlauf benachbarter Trajektorien sich um eine vorgegebene Differenz möglicher unterschiedlicher Lenkwinkel des eigenen Kraftfahrzeugs unterscheidet,
- den Verlauf der ermittelten Trajektorien für mögliche Pfade des eigenen Kraftfahrzeugs (10) mit den bereitgestellten Umfelddaten in Relation zu setzen und die ermittelten Trajektorien als (i) Trajektorien mit Kollision, (ii) kollisionsfreie Trajektorien und (iii) optimale Trajektorie zu klassifizieren,
- eine momentan befahrene Trajektorie des eigenen Kraftfahrzeugs (10) zu ermitteln und mit den klassifizierten Trajektorien zu vergleichen, und
- aus dieser Situations-Erkennung für das eigene Kraftfahrzeug (10) eine Eingriffs-Entscheidung zu treffen, wenigstens ein Signal zu erzeugen, das einen Fahrer des eigenen Kraftfahrzeugs (10) dabei unterstützt, das eigene Kraftfahrzeug (10) zu steuern, um das eigene Kraftfahrzeug (10) zumindest entlang einer kollisionsfreien Trajektorie zu führen, **dadurch gekennzeichnet, dass**
das Steuerungssystem dazu ausgebildet ist, das wenigstens eine Signal als eine intermittierende Lenkmomentüberlagerung und als eine intermittierende Bremsmomentüberlagerung beim eigenen Kraftfahrzeug einzuleiten, wobei aufeinanderfolgende einzelne Überlagerungen zeitlich so beabstandet sind, dass der Fahrer sie als gesonderten Eingriff im Sinne einer Lenkempfehlung wahrnimmt.

2. Das Steuerungssystem nach Anspruch 1, wobei das Signal als schneller ansteigender als abfallender Impuls ausgestaltet ist.

3. Ein Steuerungsverfahren, das zum Einsatz in einem eigenen Kraftfahrzeug (10) eingerichtet und bestimmt ist, basierend auf aus mindestens einem dem eigenen Kraftfahrzeug (10) zugeordneten Umfeldsensor gewonnenen Umfelddaten voraus-, neben- und nachfahrende Kraftfahrzeuge und vorausstehende Objekte zu erkennen, wobei der mindestens eine Umfeldsensor dazu eingerichtet ist, einer elektronischen Steuerung einen Bereich vor, neben und hinter dem eigenen Kraftfahrzeug wiedergebenden Umfelddaten bereitzustellen, und wobei das Steuerungsverfahren wenigstens dazu eingerichtet und bestimmt ist,
- ein am Verkehr teilnehmendes anderes Kraftfahrzeug (20) relativ zu dem eigenen Kraftfahrzeug (10) mittels des mindestens einen Umfeldsensors zu erfassen,
- Bewegungen des anderen Kraftfahrzeugs (20) relativ (i) zu einer Fahrspur, auf der sich das andere Kraftfahrzeug (20) oder das eigene Kraftfahrzeug (10) befindet und relativ (ii) zum eigenen Kraftfahrzeug (10) zu ermitteln,
- ausgehend von einem momentanen Ort des eigenen Kraftfahrzeugs (10), eine Schar mit vorgegebener Anzahl sich hinsichtlich ihrem Verlauf unterscheidender Trajektorien für mögliche Pfade des eigenen Kraftfahrzeugs (10) zu ermitteln, wobei der Verlauf benachbarter Trajektorien sich um eine vorgegebene Differenz möglicher unterschiedlicher Lenkwinkel des eigenen Kraftfahrzeugs unterscheidet,
- den Verlauf der ermittelten Trajektorien für mögliche Pfade des eigenen Kraftfahrzeugs (10) mit den bereitgestellten Umfelddaten in Relation zu setzen und die ermittelten Trajektorien als (i) Trajektorien mit Kollision, (ii) kollisionsfreie Trajektorien und (iii) optimale Trajektorie zu klassifizieren,
- eine momentan befahrene Trajektorie des eigenen Kraftfahrzeugs (10) zu ermitteln und mit den klassifizierten Trajektorien zu vergleichen, und
- aus dieser Situations-Erkennung für das eigene Kraftfahrzeug (10) eine Eingriffs-Entscheidung zu treffen, wenigstens ein Signal zu erzeugen, das einen Fahrer des eigenen Kraftfahrzeugs (10) dabei unterstützt, das eigene Kraftfahrzeug (10) zu steuern, um das eigene Kraftfahrzeug (10) zumindest entlang einer kollisionsfreien Trajektorien zu führen, **dadurch gekennzeichnet, dass**
das Signal als eine intermittierende Lenkmomentüberlagerung und als eine intermittierende Bremsmomentüberlagerung beim eigenen Kraftfahrzeug einzuleiten ist, wobei aufeinanderfolgende einzelne Überlagerungen zeitlich so beabstandet sind, dass der Fahrer sie als gesonderten Eingriff im Sinne einer Lenkempfehlung wahrnimmt.

4. Das Steuerungsverfahren nach Anspruch 3, wobei das Signal als schneller ansteigender als abfallender Impuls ausgestaltet ist.

## Claims

1. Control system which, for use in a host motor vehicle (10), is designed and intended to identify, on the basis of environment data obtained from at least one environment sensor associated with the host motor vehicle (10), motor vehicles traveling in front, to the side and behind and objects lying ahead, the at least one environment sensor being designed to provide the environment data representing a region in front of, to the side of and behind the host motor vehicle to an electronic controller of the control system, and the control system being at least designed and intended to
- detect another motor vehicle (20) which is in traffic relative to the host motor vehicle (10) by means of the at least one environment sensor,
- determine movements of the other motor vehicle (20) relative (i) to a lane in which the other motor vehicle (20) or the host motor vehicle (10) is located and relative (ii) to the host motor vehicle (10),
- determine, starting from a current location of the host motor vehicle (10), a set having a predetermined number of trajectories, which differ in terms of their course, for possible paths of the host motor vehicle (10), the course of neighboring trajectories differing by a predetermined difference in possible different steering angles of the host motor vehicle,
- relate the course of the determined trajectories for possible paths of the host motor vehicle (10) to the environment data provided and classify the determined trajectories as (i) trajectories resulting in collision, (ii) collision-free trajectories and (iii) optimal trajectory,
- determine a trajectory of the host motor vehicle (10) currently being traveled on and compare it with the classified trajectories, and
- make an intervention decision for the host motor vehicle (10) from this situational identification, generate at least one signal which assists a driver of the host motor vehicle (10) in controlling the host motor vehicle (10) in order to guide the host motor vehicle (10) at least along a collision-free trajectory, **characterized in that**
the control system is designed to initiate the at least one signal as an intermittent steering torque overlay and as an intermittent braking torque overlay in the host motor vehicle, with successive individual overlays being spaced apart in time such that the driver perceives them as a separate intervention in the sense of a steering recommendation.

2. Control system according to claim 1, wherein the signal is designed as a pulse which rises more quickly than it falls.

3. Control method which, for use in a host motor vehicle (10), is designed and intended to identify, on the basis of environment data obtained from at least one environment sensor associated with the host motor vehicle (10), motor vehicles traveling in front, to the side and behind and objects lying ahead, the at least one environment sensor being designed to provide environment data representing a region in front of, to the side of and behind the host motor vehicle to an electronic controller, and the control method being at least designed and intended to
- detect another motor vehicle (20) which is in traffic relative to the host motor vehicle (10) by means of the at least one environment sensor,
- determine movements of the other motor vehicle (20) relative (i) to a lane in which the other motor vehicle (20) or the host motor vehicle (10) is located and relative (ii) to the host motor vehicle (10),
- determine, starting from a current location of the host motor vehicle (10), a set having a predetermined number of trajectories, which differ in terms of their course, for possible paths of the host motor vehicle (10), the course of neighboring trajectories differing by a predetermined difference in possible different steering angles of the host motor vehicle,
- relate the course of the determined trajectories for possible paths of the host motor vehicle (10) to the environment data provided and classify the determined trajectories as (i) trajectories resulting in collision, (ii) collision-free trajectories and (iii) optimal trajectory,
- determine a trajectory of the host motor vehicle (10) currently being traveled on and compare it with the classified trajectories, and
- make an intervention decision for the host motor vehicle (10) from this situational identification, generate at least one signal which assists a driver of the host motor vehicle (10) in controlling the host motor vehicle (10) in order to guide the host motor vehicle (10) at least along a collision-free trajectory, **characterized in that**
the signal is to be initiated as an intermittent steering torque overlay and as an intermittent braking torque overlay in the host motor vehicle, with successive individual overlays being spaced apart in time such that the driver perceives them as a separate intervention in the sense of a steering recommendation.

4. Control method according to claim 3, wherein the signal is designed as a pulse which rises more quickly than it falls.

## Revendications

1. Système de commande configuré et destiné à être utilisé dans un véhicule à moteur concerné (10) pour détecter, sur la base de données d'environnement obtenues à partir d'au moins un capteur d'environnement associé au véhicule à moteur concerné (10), des véhicules à moteur circulant devant, à côté et derrière et des objets se trouvant à l'avant, l'au moins un capteur d'environnement étant configuré pour fournir, à une commande électronique du système de commande, les données d'environnement représentant une zone devant, à côté et derrière le véhicule à moteur concerné, et le système de commande étant au moins configuré et destiné à
- détecter, au moyen de l'au moins un capteur d'environnement, un autre véhicule à moteur (20) en circulation par rapport au véhicule à moteur concerné (10),
- déterminer des mouvements de l'autre véhicule à moteur (20) par rapport (i) à une voie de circulation sur laquelle se trouve l'autre véhicule à moteur (20) ou le véhicule à moteur concerné (10), et par rapport (ii) au véhicule à moteur concerné (10),
- déterminer, à partir d'un emplacement actuel du véhicule à moteur concerné (10), un ensemble comportant un nombre prédéterminé de trajectoires différant en termes de parcours, pour des itinéraires possibles du véhicule à moteur concerné (10), le parcours de trajectoires voisines différant par une différence prédéterminée de différents angles de direction possibles du véhicule à moteur concerné,
- relier le parcours des trajectoires déterminées pour des itinéraires possibles du véhicule à moteur concerné (10) aux données d'environnement fournies, et classer les trajectoires déterminées en tant que (i) trajectoires avec collision, (ii) trajectoires sans collision et (iii) trajectoire optimale,
- déterminer une trajectoire actuellement parcourue par le véhicule à moteur concerné (10), et la comparer avec les trajectoires classées, et à
- prendre une décision d'intervention à partir de cette détection de situation pour le véhicule à moteur concerné (10), pour générer au moins un signal qui aide un conducteur du véhicule à moteur concerné (10) à conduire le véhicule à moteur concerné (10) afin de guider le véhicule à moteur concerné (10) au moins le long d'une trajectoire sans collision, **caractérisé en ce que**
le système de commande est conçu pour déclencher l'au moins un signal en tant que superposition de couple de direction intermittente et en tant que superposition de couple de freinage intermittente dans le véhicule à moteur concerné, les superpositions individuelles successives étant espacées dans le temps de sorte que le conducteur les perçoive comme une intervention distincte dans le sens d'une recommandation de direction.

2. Système de commande selon la revendication 1, le signal étant configuré comme une impulsion dont la montée est plus rapide que la descente.

3. Procédé de commande configuré et destiné à être utilisé dans le véhicule à moteur concerné (10) pour détecter, sur la base de données d'environnement obtenues à partir d'au moins un capteur d'environnement associé au véhicule à moteur concerné (10), des véhicules à moteur circulant devant, à côté et derrière et des objets se trouvant à l'avant, l'au moins un capteur d'environnement étant configuré pour fournir, à une commande électronique, une zone devant, à côté et derrière le véhicule à moteur concerné, et le système de commande étant au moins configuré et destiné à
- détecter, au moyen de l'au moins un capteur d'environnement, un autre véhicule à moteur (20) en circulation par rapport au véhicule à moteur concerné (10),
- déterminer des mouvements de l'autre véhicule à moteur (20) par rapport (i) à une voie de circulation sur laquelle se trouve l'autre véhicule à moteur (20) ou le véhicule à moteur concerné (10) et par rapport (ii) au véhicule à moteur concerné (10),
- déterminer, à partir d'un emplacement actuel du véhicule à moteur concerné (10), un ensemble comportant un nombre prédéterminé de trajectoires différant en termes de parcours, pour des itinéraires possibles du véhicule à moteur concerné (10), le parcours de trajectoires voisines différant par une différence prédéterminée de différents angles de direction possibles du véhicule à moteur concerné,
- relier le parcours des trajectoires déterminées pour des itinéraires possibles du véhicule à moteur concerné (10) aux données d'environnement fournies, et classer les trajectoires déterminées en tant que (i) trajectoires avec collision, (ii) trajectoires sans collision et (iii) trajectoire optimale,
- déterminer une trajectoire actuellement parcourue par le véhicule à moteur concerné (10), et la comparer avec les trajectoires classées, et à
- prendre une décision d'intervention à partir de cette détection de situation pour le véhicule à moteur concerné (10), pour générer au moins un signal qui aide un conducteur du véhicule à moteur concerné (10) à conduire le véhicule à moteur concerné (10) afin de guider le véhicule à moteur concerné (10) au moins le long d'une trajectoire sans collision, **caractérisé en ce que**
le signal doit être déclenché en tant que superposition de couple de direction intermittente et en tant que superposition de couple de freinage intermittente dans le véhicule à moteur concerné, les superpositions individuelles successives étant espacées dans le temps de sorte que le conducteur les perçoive comme une intervention distincte au sens d'une recommandation de direction.

4. Procédé de commande selon la revendication 3, le signal étant configuré comme une impulsion dont la montée est plus rapide que la descente.
